Europäisches Patentamt

European Patent Office

Office européen des brevets

(19)

(11) Veröffentlichungsnummer: **0 143 773**
**B1**

(12) **EUROPÄISCHE PATENTSCHRIFT**

(45) Veröffentlichungstag der Patentschrift:
04.01.89

(51) Int. Cl.⁴: **G 01 B 3/00,** G 01 D 5/26

(21) Anmeldenummer: 84890206.0

(22) Anmeldetag: 05.11.84

(54) Längenmesseinrichtung, insbesondere gekapselte Längenmesseinrichtung.

(30) Priorität: 22.11.83 AT 4087/83

(43) Veröffentlichungstag der Anmeldung:
05.06.85 Patentblatt 85/23

(45) Bekanntmachung des Hinweises auf die Patenterteilung:
04.01.89 Patentblatt 89/1

(84) Benannte Vertragsstaaten:
BE CH DE FR GB IT LI LU NL SE

(56) Entgegenhaltungen:
EP-A-0 040 684
DE-A-2 510 219
DE-A-3 206 591
DE-A-3 210 962
DE-B-2 349 944

(73) Patentinhaber: EMR Elektronische Mess- und Regelgeräte Gesellschaft m.b.H., A-5121 Tarsdorf (AT)

(72) Erfinder: Rieder, Heinz, A-5120 St. Pantaleon (CH)
Erfinder: Schwaiger, Max, A-5121 Ostermiething (CH)

(74) Vertreter: Hübscher, Gerhard, Dipl.- Ing., Patentanwälte Dipl.- Ing. Gerhard Hübscher Dipl.- Ing. Helmut Hübscher Dipl.- Ing. Heiner Hübscher Spittelwiese 7, A-4020 Linz (AT)

## Beschreibung

Die Erfindung betrifft eine Längenmeßeinrichtung, insbesondere eine gekapselte Längenmeßeinrichtung mit einem an einem Träger angebrachten Maßstab und einer optoelektronischen Abtasteinheit mit einer Abtastplatte, Beleuchtungseinrichtungen und lichtempfindlichen Empfängern, wobei die Abtasteinheit über einen den Meßfühler bildenden Mitnehmer in Längsrichtung des Maßstabes verstellbar ist und zur Erzielung einer dem Maßstab folgenden Abtastrichtung Hilfsführungen vorgesehen sind, sowie die Verbindung mit dem Mitnehmer quer zur Meßrichtung nachgiebig ausgebildet ist.

Konstruktionen dieser Art sind aus den DE-A1-2 349 944 und DE-A1-2 510 219 sowie der EP-A-0 040 684 bekannt. Es soll erreicht werden, daß die Messung in der durch den Verlauf des Maßstabes selbst vorbestimmten Meßrichtung erfolgt, so daß sonst durch Querabweichungen des Meßfühlers, der beispielsweise mit der Spindel einer Werkzeugmaschine gekuppelt ist, bedingte Meßfehler ausgeschaltet werden und vor allem auch ein Abheben der Abtastplatte bzw. eine Änderung des Abstandes der Abtastplatte vom Maßstab verhindert wird. Bei den bekannten Längenmeßeinrichtungen sind die Abtastplatte, die Beleuchtungseinrichtungen und die lichtempfindlichen Empfänger innerhalb der Abtasteinheit zu einer starren, meist in einem Zusatzgehäuse untergebrachten Einheit verbunden, wobei die quer zur Meßrichtung nachgiebige Verbindung zwischen dieser Einheit und dem Meßfühler vorgesehen ist. Die Verbindung enthält auch Andrückfedern, welche diese Abtasteinheit mit Gleitern oder Rollen gegen die meist aus zwei senkrecht zueinander stehenden Führungsflächen bestehenden Hilfsführungen drücken. Wird eine dieser Hilfsführungen vom Maßstab selbst gebildet, so müssen die Gleiter oder Rollen an der Abtasteinheit mit relativ großem Abstand von der Abtastplatte vorgesehen werden. Es ergibt sich dadurch nur eine genaue Führung der gesamten Abtasteinheit, nicht aber der Abtastplatte relativ zum Maßstab und es wird notwendig, den Maßstab zur Bildung von Führungsflächen unverhältnismäßig stark zu verbreitern. Die beweglich am Fühler abzustützende Abtasteinheit besitzt eine vergleichsweise große Eigenmasse. Es sind daher relativ stark dimensionierte Federn notwendig, um die Gleiter oder Rollen der Abtasteinheit auch bei auftretenden Virbrationen oder Stößen, wie sie bei der Abringung der Längenmeßeinrichtung an Werkzeugmaschinen unvermeidlich sind, sicher mit den Hilfsführungen in Eingriff zu halten. Dementsprechend ergeben sich hohe Andrückkräfte an diese Hilfsführungen. Nach der EP-A1-0 040 684 ist deshalb vorgesehen, die Hilfsführungen aus in flache Nuten eines die Meßeinrichtung kapselnden, geschlitzten Rohrgehäuses aus Aluminium lose eingelegten Stahlbändern zu bilden. Ein weiterer entscheidender Nachteil der bekannten Längenmeßeinrichtungen der gegenständlichen Art besteht darin, daß die Leitungen zu den Beleuchtungseinrichtungen und den lichtempfindlichen Empfängern, die vielfach gleich mit Verstärkern oder sonstigen Verarbeitungseinheiten für die Signale auf Platinen angebracht werden, ebenfalls so geführt werden müssen, daß sie die Querbewegungen der Abtasteinheit relativ zum Mitnehmer zulassen.

Zur Lösung anderer Aufgaben, nämlich zur Relativverstellung der Abtasteinheit gegenüber dem Mitnehmer für die Korrektur einer Messung, beispielsweise für den Ausgleich von Teilungsfehlern, ist es bekannt, die Abtasteinheit gegenüber dem Mitnehmer in Längsrichtung des Maßstabes verstellbar oder kippbar auszubilden und eine Korrekturführung vorzusehen, die meist ein Korrekturprofil enthält, das bei einer Vergleichsmessung mit einem übergeordneten Meßsystem bestimmt und über einen Abtaster abgetastet wird, der die Abtasteinheit entsprechend vor- oder zurückverstellt bzw. schwenkt. Entsprechende Konstruktionen sind aus den DE-A1-3 208 591 und DE-A1-3 210 962 bekannt. Bei der verschwenkbaren Ausführung nach der DE-A1-3 210 962 ist es dabei auch bekannt, lediglich die Abtastplatte zu verschwenken, die übrigen Teile der Abtasteinheit aber unabhängig von der Verschwenkung in Maßstablängsrichtung zu führen. Will man dabei trotzdem erreichen, daß die Abtasteinheit dem Maßstab in der vorbestimmten Meßrichtung folgt, so muß man die gesamte Abtasteinheit wieder in der eingangs beschriebenen Weise führen und mit dem Meßfühler verbinden. Es ist grundsätzlich zur Ermöglichung der Kippverstellung der Abtastplatte die Einhaltung eines reltaiv großen Abstandes dieser Abtastplatte vom Maßstab notwendig, wobei dieser Abstand bei der Kippung zumindest in einzelnen Gitterbereichen schwankt, so daß Signalverzerrungen auftreten, die wieder kompensiert werden müssen. Die Gesamtkonstruktion ist bei Gewährleistung einer dem Maßstab folgenden Meßrichtung noch aufwendiger als die Längenmeßeinrichtungen der eingangs genannten Art, wobei alle Nachteile erhalten bleiben. Die gleichen Nachteile hat auch die Konstruktion nach der DE-A1-3 208 591. Bei dieser Ausführung ist die Abtastplatte gegenüber der übrigen Abtasteinheit an ein Lenkerparallellogramm bildenden Federn parallel zu sich selbst verstellbar geführt, wobei für die Verstellung wieder ein eine Schablone abtastender Fühler vorgesehen wird oder die Verstellung auf piezoelektrischem Wege durch Erzeugung entsprechender Steuersignale erfolgt. Selbst wenn man hier, was nicht geoffenbart ist, die Abtasteinheit so führt, daß sie zwangsweise dem Maßstab folgt, kommt es bei der relativen Längsverstellung der Abtastplatte zu Abstandsänderungen dieser Platte vom Maßstab.

Es muß wieder zwingend ein größerer Abstand der Abtastplatte vom Maßstab eingehalten werden.

Aufgabe der Erfindung ist es, den Gesamtaufbau einer Längenmeßeinrichtung der eingangs genannten Art zu vereinfachen und dabei Lebensdauer und Betriebssicherheit zu erhöhen.

Die gestellte Aufgabe wird dadurch gelöst, daß lediglich die Abtastplatte an den Hilfsführungen geführt ist, von denen die eine der Maßstab selbst ist, die Beleuchtungseinrichtungen und die lichtempfindlichen Empfänger der Abtasteinheit aber am Mitnehmer befestigt sind, und daß die quer zur Meßrichtung nachgiebige Verbindung zwischen dem Mitnehmer und der Abtastplatte vorgesehen ist.

Die Erfindung beruht auf der Erkenntnis, daß die exakte Führung der Abtastplatte relativ zum Maßstab allein insbesondere dann entscheidend ist, wenn ein fixer Abstand (Spaltgröße) gewährleistet bzw. ein Abheben der Abtastplatte vom Maßstab sicher verhindert wird und die Abtastplatte dem Maßstab genau folgt. Die normalerweise geringen Relativverstellungen der Beleuchtungseinrichtungen und Empfänger, die in ihrer Bewegung dem Meßfühler folgen, bedingen keine das Meßergebnis verfälschende Signaländerung. In der Praxis kann es bei der Abtastung eines Inkrementalmaßstabes unter Verwendung einer Abtastplatte mit mehreren gegeneinander um Teilungsbruchteile und eine beliebige Anzahl ganzer Teilungen versetzten Abtastgitter, denen gesonderte lichtempfindliche Empfänger und gesonderte oder gemeinsame Beleuchtungseinrichtungen zugeordnet sind, beim Meßvorgang nur zu leicht kompensierbaren Änderungen der Signalstärke bzw. der Gleichspannungsanteile der am Ausgang der lichtempfindlichen Empfänger anstehenden, meist sinusähnlichen und gegeneinander phasenverschobenen Signale kommen. Dabei können die lichtempfindlichen Empfänger und die Beleuchtungseinrichtungen mit ihren Zuleitungen fest an einem einen Bestandteil des Fühlers bildenden Bauteil montiert sein. Lediglich die eine vergleichweise geringe Eigenmasse aufweisende Abtastplatte wird entlang des Maßstabes an den Hilfsführungen geführt, wobei mit geringen Andrückkräften das Auslangen gefunden wird. Es können einfache Konstruktionen für die Andrückeinrichtungen und die Führungselemente der Abtastplatte gewählt werden. Da die Abtastplatte selbst am Maßstab geführt ist, bleibt die Spaltgröße konstant, der Maßstab kann schmäler als bei den bekannten Konstruktionen ausgeführt werden und es ist die notwendige Betriebssicherheit gewährleistet. Unter Beibehaltung der Grundkonstruktion können auch Korrekturen durch Längsverstellung der Abtastplatte gegenüber der übrigen Abtasteinheit mit Hilfe eines einer Abtastschablone od. dgl. folgenden Fühlers vorgenommen werden, wobei auch hier die Spaltgröße eingehalten wird und die Abtastung in Maßstablängsrichtung erfolgt.

Die Hilfsführungen können aus dem Maßstab selbst und einer normal zum Maßstab am Träger vorgesehenen Gleitfläche bestehen, die von einem gespannten Metallband gebildet ist, dessen Verlauf durch abstandsweise angebrachte, im Träger geführte Stellschrauben einstellbar ist.

Nach einer einfachen Ausführung ist die Abtastplatte mit Gleitern an Maßstab und Gleitfläche abgestützt und über eine gemeinsame, in einer Teilungsebene des von den Führungsflächen eingeschlossenen Winkels wirkende Druckfeder mit den übrigen Teilen der Abtasteinheit verbunden. Hier hält eine einzige Feder die Gleiter der Abtastplatte in Eingriff mit beiden Führungsflächen.

In der Zeichnung ist der Erfindungsgegenstand beispielsweise veranschaulicht. Es zeigen

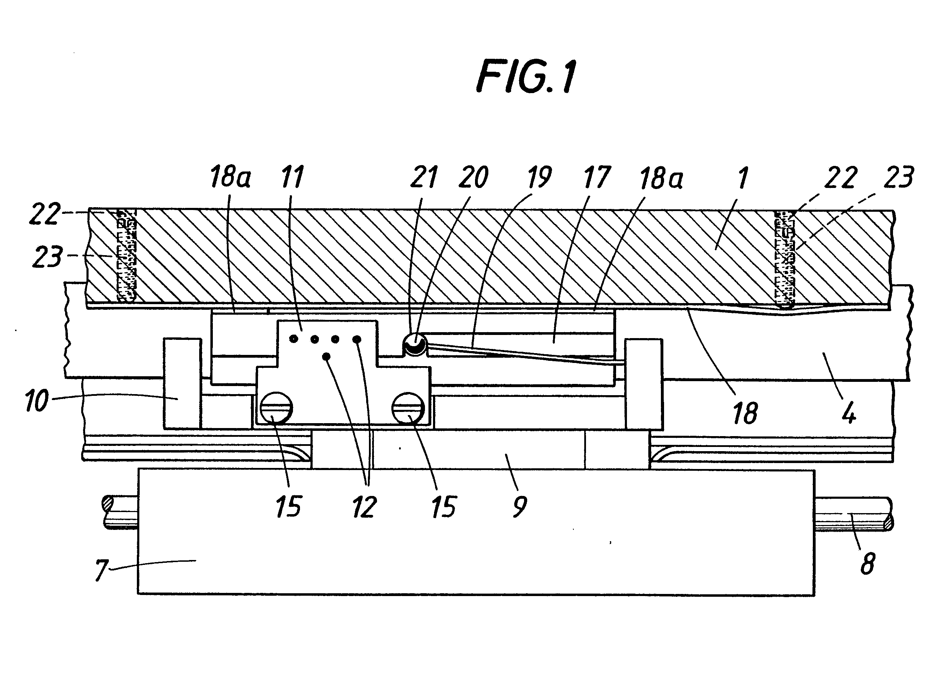

Fig. 1    eine Längenmeßeinrichtung im Längsschnitt durch ihren Träger und

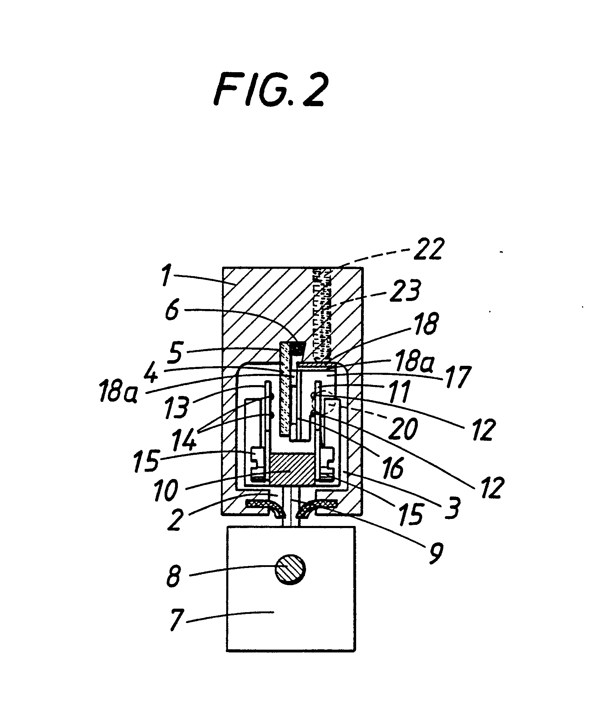

Fig. 2    die Längenmeßeinrichtung nach Fig. 1 bei im Querschnitt dargestelltem Träger.

Die Längenmeßeinrichtung besitzt einen meist aus einem Strangpreßprofil bestehenden Träger 1 in Form eines unten mit einem Schlitz 2 versehenen Rechteckrohres, dessen obere Wandung zur Erzielung der notwendigen Biegesteifigkeit stark verdickt ist. Beim Ausführungsbeispiel ist in der Höhlung 3 des Trägers 1 ein Glasmaßstab 4 dadurch befestigt, daß dieser Maßstab 4 mit dem einen Rand in eine Nut 5 eingelegt und dort durch ein elastisches Band 6, Klemmstück od. dgl. in seiner Lage gesichert ist. Der in die Höhlung 3 einragende Hauptteil des Maßstabes 4 trägt eine Meßteilung, beispielsweise eine Inkrementalteilung aus einem Strichraster.

Ein dem zu messenden Objekt zugeordneter Meßfühler besitzt ein Ankoppelungsstück 7, das z. B. gemeinsam mit einem Messerhalter auf der Spindel 8 einer Werkzeugmaschine geführt ist, ein durch den Schlitz 2 geführtes Schwert 9 und eine auch als Meßwagen bezeichnete, in der Höhlung 3 untergebrachte Abtasteinheit 10. Die Teile 7, 9, 10 sind untereinander starr verbunden. Das Schwert 9 greift im Schlitz 2 zwischen der Staubabdichtung dienende Dichtlippen ein, so daß Maßstab 4 und Abtasteinheit 10 in der Höhlung 3 gekapselt sind.

Am Meßwagen 10 sind einander gegenüberliegend eine Platine 11 mit Leuchtdioden 12 und eine Platine 13 mit Phototransistoren 14 mit Hilfe von Schrauben 15 befestigt. Jeder Diode 12 liegt mit Abstand ein Transistor 14 gegenüber. Zwischen den Dioden 12 und den Transistoren 14 befinden sich der Maßstab 4 und eine Abtastplatte 16. Die Abtastplatte 16 trägt gegeneinander versetzte, den Dioden-Transistorpaaren 12, 14 zugeordnete Ablesefelder, wobei jeweils eine Diode 12 durch den Maßstab 4 und das zugeordnete Ablesefeld der Abtastplatte 16 hindurch den zugeordneten Phototransistor 14 beleuchtet. Die Beleuchtungsstärke der Phototransistoren ändert sich mit der Änderung der Relativlage der Ablesefelder der Abtastplatte 16 gegenüber dem Maßstab 4, sodaß an den Ausgängen der Transistoren sich entsprechend der Beleuchtungsstärke und damit der Relativverstellung ändernde Signale anstehen, die einer Auswertungseinheit zugeführt werden, welche aus den gegeneinander phasenversetzten Signalen die Verstellrichtung des Meßwagens 10 gegenüber dem Maßstab diskriminiert und durch Zählung der ganzen Signalzüge, beispielsweise der Nulldurchgänge der Signalzüge und/oder durch elektronische Unterteilung oder Interpolationsberechnung eine weitere Unterteilung des durch die Grundteilung gegebenen Maßstabes vornimmt und allenfalls unter Zuhilfenahme eines Rechners Ausgangssignale erzeugt, die entweder als Meßergebnis angezeigt oder/und einer Steuereinheit für die Maschine zugeführt werden.

Die Abtastplatte 16 stützt sich mit Kunststoffgleitern 18a an der zugeordneten Seite des Maßstabes 4 ab. Ferner ist die Abtastplatte 16 mit einem die Abtastfelder freilassenden Träger 17 verbunden, der sich mit an seiner Oberseite vorgesehenen Gleitern 18a an einem Stahlband 18 abstützt, das neben der Nut 5 oben in die Rohrhöhlung 3 eingelegt und in Längsrichtung gespannt ist. Die zur Abtastplatte 16 weisende Seite des Maßstabes 4 und die nach unten weisende Seite des Stahlbandes 18 bilden Führungsflächen für die Gleiter 18a der Abtastplatte 16. An dem die übrige Abtasteinheit enthaltenden Meßwagen 10 sitzt eine Feder 19, die am Ende eine Kugel 20 trägt, welche spielfrei in eine Ausnehmung des Trägers 17 eingreift. Die Feder 19 ist vorgespannt und drückt etwa in Diagonalrichtung auf die von den beiden erwähnten Führungsflächen eingeschlossene Kante zu. Somit hält die Feder 19 mit der Kugel 20 die Abtastplatte 16 mit den ihr zugeordneten Führungen 4, 18 in Eingriff.

Relativ zu diesen Führungen und der Verstellrichtung der Abtastplatte 16 sind Verstellungen des Wagens 10 und damit des gesamten Fühlers 7, 9, 10 der Höhe und der Seite nach möglich.

Zur genauen Festlegung des Verlaufes der vom Band 18 gebildeten Führungsfläche sind im Träger 1 abstandsweise Gewindebohrungen 22 angebracht, in denen als Wurmschrauben ausgebildete und gegen das Band 18 anstellbare Stellschrauben 23 geführt sind.

Selbstverständlich sind konstruktive Änderungen möglich, ohne daß dadurch der Rahmen der Erfindung gemäß dem Anspruch 1 verlassen wird, insbesondere kann man eine entsprechende Konstruktion auch bei im Auflichtverfahren arbeitenden Abtasteinheiten, bei denen Abtastplatte, Beleuchtungseinrichtungen und lichtempfindliche Empfänger an der gleichen Maßstabseite angeordnet sind und die Empfänger das von der Maßstabteilung durch die Abtastplatte reflektierte Licht empfangen bzw. der Maßstab rückseitig verspiegelt und Empfänger und Lichtquellen quer zum Maßstab versetzt sind, verwirklichen. Die Führungsflächen und der bzw. die Mitnehmer sowie die Andrückfedern können anders als dargestellt ausgeführt werden. Man kann auch die Abtastplatte 16 in Maßstablängsrichtung relativ zum Meßwagen 10 verschiebbar anordnen und eine Stelleinrichtung vorsehen, die eine solche Relativverstellung in Abhängigkeit von einem Korrekturprofil vornimmt.

## Patentansprüche

1. Längenmeßeinrichtung, insbesondere gekapselte Längenmeßeinrichtung, mit einem an einem Träger (1) angebrachten Maßstab (4) und einer optoelektronischen Abtasteinheit mit einer Abtastplatte (16), Beleuchtungseinrichtungen (11, 12) und lichtempfindlichen Empfängern (13, 14), wobei die Abtasteinheit über einen den Meßfühler bildenden Mitnehmer (7, 8, 9) in Längsrichtung des Maßstabes (4) verstellbar ist und zur Erzielung einer dem Maßstab folgenden Abtastrichtung Hilfsführungen (4, 18) vorgesehen sowie die Verbindung mit dem Mitnehmer quer zur Meßrichtung nachgiebig ausgebildet ist, dadurch gekennzeichnet, daß lediglich die Abtastplatte (16) an den Hilfsführungen (4, 18) geführt ist, von denen die eine der Maßstab (4) selbst ist, die Beleuchtungseinrichtungen (11, 12) und die lichtempfindlichen Empfänger (13, 14) der Abtasteinheit aber am Mitnehmer (7, 9, 10) befestigt sind, und daß die quer zur Meßrichtung nachgiebige Verbindung (19, 20, 21) zwischen dem Mitnehmer (7, 9, 10) und der Abtastplatte (16) vorgesehen ist.

2. Längenmeßeinrichtung nach Anspruch 1, dadurch gekennzeichnet, daß die Hilfsführungen (4, 18) aus dem Maßstab (4) selbst und einer normal zum Maßstab am Träger (1) vorgesehenen Gleitfläche (18) bestehen, die von einem gespannten Metallband (18) gebildet ist, dessen Verlauf durch abstandsweise angebrachte, im Träger geführte Stellschrauben (23) einstellbar ist.

3. Längenmeßeinrichtung nach den Ansprüchen 1 und 2, dadurch gekennzeichnet, daß die Abtastplatte (16) mit Gleitern (18a) an Maßstab (4) und Gleitfläche (18) abgestützt und über eine gemeinsame, in einer Teilungsebene des von den Führungsflächen (4, 18) eingeschlossenen Winkels wirkende Druckfeder (19) mit den übrigen Teilen (10) der Abtasteinheit verbunden ist.

## Claims

1. An instrument for measuring lengths, particularly a sealed instrument for measuring lengths, comprising a rule (4) which is mounted on a carrier (1) and an optoelectronic scanning unit including a scanning plate (16), illuminating means (11, 12) and light receivers (13, 14), wherein the scanning unit is movable along the rule (4) by a coupling member (7, 8, 9), which constitutes the feeler, auxiliary tracks (4, 18) are provided for ensuring a scanning movement along the scale, and means are provided which are yieldable transversely to the measuring direction and establish a connection to the coupling element, characterized in that only the scanning plate (16) is guided by the auxiliary tracks (4, 18), one of which is constituted by the rule (4), the illuminating means (11, 12) and the light receivers (13, 14) of the scanning unit are secured to the coupling member (7, 9, 10), and the connecting means (19, 20, 21) which are yieldable transversely to the measuring direction provide a connection between the coupling member (7, 9, 10) and the scanning plate (16).

2. An instrument for measuring lengths according to claim 1, characterized in that the auxiliary tracks (4, 18) are constituted by the rule (4) and by a sliding surface (18), which is provided on the carrier (1) and extends normal to the rule and is constituted by a tensioned metal tape, the configuration of which is adjustable by spaced apart adjusting screws (23) guided in the carrier.

3. An instrument for measuring lengths according to claims 1 and 2, characterized in that the scanning plate (16) is provided with sliders (18a), which support the scanning plate (16) on the rule (4) and on the sliding surface (18), and the scanning plate is connected to the remaining parts (10) of the scanning unit by a common compression spring (19), which acts in an osculating plane of the angle that is included by the guiding surfaces (4, 18).

## Revendications

1. Dispositif de mesure des longueurs, notamment dispositif de mesure des longueurs protégé sous capsule, comprenant une règle graduée (4) fixée à un support (1), et une unité de lecture opto-électronique comprenant une plaque de lecture (16), des dispositifs d'éclairage (11, 12) et des récepteurs photo-sensibles (13, 14), dans lequel l'unité de lecture peut être déplacée dans la direction longitudinale de la règle graduée (4) au moyen d'un entraîneur (7, 8, 9) qui forme le capteur de mesure, et dans lequel, pour obtenir une direction de lecture qui suit la règle graduée, il est prévu des guidages auxiliaires (4, 18) et la liaison avec l'entraîneur est agencée de façon à pouvoir céder transversalement à la direction de la mesure, caractérisé par le fait que seule la plaque de lecture (16) est guidée le long des guidages auxiliaires (4, 18), dont l'un est la règle graduée (4) proprement dite, tandis que les dispositifs d'éclairage (11, 12) et les récepteurs photo-sensibles (13, 14) de l'unité de lecture sont fixés à l'entraîneur (7, 9, 10) et par le fait que la liaison (19, 20) capable de prêter transversalement à la direction de mesure est prévue entre l'entraîneur (7, 9, 10) et la plaque de lecture (16).

2. Dispositif de mesure des longueurs selon la revendication 1, caractérisé en ce que les guidages auxiliaires (4, 18) sont constitués par la règle graduée (4) proprement dite et par une surface de glissement (18) prévue sur le support (1), perpendiculairement à la règle graduée, et qui est formée par une bande métallique tendue (18), dont le profil peut être réglé par des vis de réglage (23) disposées à un certain écartement mutuel et montées dans le support.

3. Dispositif de mesure des longueurs selon les revendications 1 et 2, caractérisé en ce que la plaque de lecture (16) prend appui au moyen de patins (18a) sur la règle graduée (4) et sur la surface de glissement (18), et est reliée aux autres parties (10) de l'unité de lecture par l'intermédiaire d'un ressort de compression commun (19) qui agit dans un plan de division de l'angle formé par les surfaces (4, 18) de guidage.

FIG.1

EP 0 143 773 B1

# FIG. 2